# EUROPEAN PATENT SPECIFICATION

(11) **EP 3 359 434 B1**
(45) Date of publication and mention of the grant of the patent: **27.05.2020**
(21) Application number: 16801300.1
(22) Date of filing: 07.10.2016
(51) Int. Cl.: B60T 13/66, B60T 17/22

(54) **TRACTION AND BRAKING CONTROL SYSTEM FOR A RAILWAY TRAIN SET**
ANTRIEB- UND BREMSREGELSYSTEM FÜR SCHIENENFAHRZEUGE
SYSTÈME DE CONTRÔLE DE TRACTION ET FREINAGE POUR UN CONVOI FERROVIAIRE

(30) Priority: 09.10.2015 IT UB20154278
(43) Date of publication of application: 15.08.2018
(73) Proprietor: Faiveley Transport Italia S.p.A., 10045 Piossasco (TO) (IT)
(72) Inventor: TIONE, Roberto, I-10020 Lauriano (Torino) (IT); GRASSO, Angelo, I-14053 Canelli (Asti) (IT)
(74) Representative: Deambrogi, Edgardo
(86) International application number: PCT/IB2016/056004
(87) International publication number: WO 2017/060858

(56) References cited:
- DE-A1- 10 249 714
- DE-A1-102012 108 395
- US-A- 5 950 967
- US-A1- 2010 235 022

## Description

The present invention relates to a traction and braking control system for a railway train set.

More specifically, the present invention relates to a traction and braking control system for a railway train set comprising a leading master locomotive, at least one trailing or intermediate slave locomotive and a plurality of carriages or cars, and provided with a pneumatic braking system, in which each of said locomotives comprises braking and traction apparatus associated with respective manual control devices and a respective electronic control unit and related transceiver means through which the electronic control unit of the master locomotive is able to communicate with the control unit of said at least one slave locomotive; the arrangement being such that the traction and braking apparatus of the at least one slave locomotive can be controlled by the master locomotive.

In existing railway train sets, all of the locomotives operate synchronously, i.e. the slave locomotive or locomotives execute all of the traction and braking control commands given by the driver of the leading master train set.

This control system has the advantage of being extremely simple to operate, and the driver of the leading locomotive drives the train set as if it were a head-end train.

However, such systems have a limited capacity to control slack action. Indeed, on certain section profiles, such control systems may not be able to limit the occurrence of significant longitudinal forces between the vehicles that make up the train set, in extension or in compression, resulting in dangerous stresses and accident risks.

Devices to help with driving and event recording that are designed to "predict" the future state of a train set on the basis of the traction and braking commands given by the driver are known. However, such systems are based on the ability of the driver to use personal experience to "interpret" the predictive information provided and to subsequently give commands.

Such systems also fail to address the problem of controlling slack action of the train set in track sections with "difficult" route profiles.

One purpose of the present invention is to propose a traction and braking control system for a railway train set of the type defined above that has been improved to enable a more effective management of the issues set out above.

This objective and others are achieved according to the invention using a traction and braking control system according to claim 1, wherein the control unit in the master locomotive is associated with:
- sensor means designed to provide said control unit with signals indicating the speed and/or acceleration of the master locomotive and the controls applied by the driver to the traction braking control devices,
- memory means storing data indicating the composition of the train set, data defining a mathematical model of the longitudinal dynamics of the train set, as well as data defining a profile of the section on which the train set is travelling, and data defining at least one predetermined operational objective;
- positioning means for providing signals indicating the instantaneous position of the train set along said section; and
- a human-machine interface for providing information to the driver;
   the control unit of the master locomotive being designed to
   check whether the instructions given by the driver using the traction control devices and the braking control devices are consistent with said operational objective, and to use the human-machine interface to provide the driver with instructions on how to operate said control devices to achieve said objective; and
   - generate, in a predetermined manner and as a function of the data stored in said memory means and the information provided by said sensor means and the positioning means, signals for controlling traction and/or braking, and to transmit said control signals to the control unit of said at least one slave locomotive through said transceiver means.

In the prior art document, US 5950967 A, a train throttle and brake control apparatus for use in a train having a master locomotive and one or more slave locomotives remotely located in the train is provided.

In one embodiment, the control unit of the master locomotive is also designed to generate, in a predefined manner, additional signals for controlling traction and/or braking, and to use said additional command signals to control the braking and traction apparatus of the master locomotive.

Further characteristics and advantages of the system according to the invention are set out in the detailed description below, provided purely as a non-limiting example and with reference to the attached drawings, in which:
Figure 1 is a partial schematic side view of a railway train set provided with a traction and braking control system according to the present invention;
Figure 2 is a block diagram showing the equipment of the leading master locomotive of a railway train set provided with a control system according to the present invention; and
Figure 3 is a similar block diagram showing the control equipment of each slave locomotive of a railway train set provided with a control system according to the present invention.

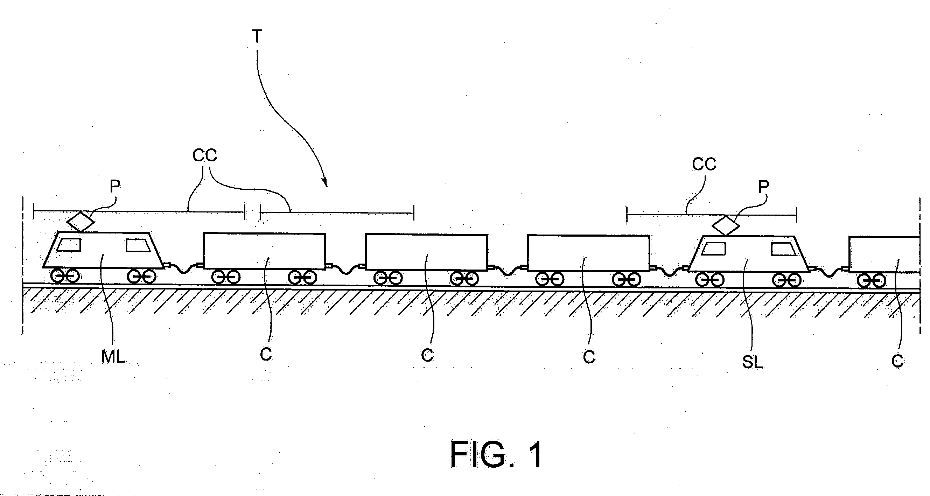

In Figure 1, reference sign T indicates the railway train set as a whole, including a leading master locomotive ML and at least one intermediate or trailing slave locomotive SL, as well as a plurality of cars or carriages C.

In the embodiment shown schematically in Figure 1, the locomotives ML and SL are electric locomotives powered by and overhead conductor CC via respective pantographs P. However, the invention is not limited to application to train sets including such locomotives.

The train set T is provided with a pneumatic braking system of a known type, in which all of the vehicles in the train set are connected together pneumatically by a brake pipe that is kept at a predetermined pressure, for example 5 bar, and keeps the brakes of all of the vehicles open.

A pressure drop in the brake pipe, caused by actuating a brake cock in the driving cab of the master locomotive ML, is propagated throughout the entire train set and reaches the braking equipment on the individual vehicles. A distributor in said vehicles, which is usually associated with a control cylinder and an auxiliary cylinder, causes air to enter the brake cylinders, thereby braking the train set.

A subsequent pressure increase in the brake pipe again releases the brakes on the train set.

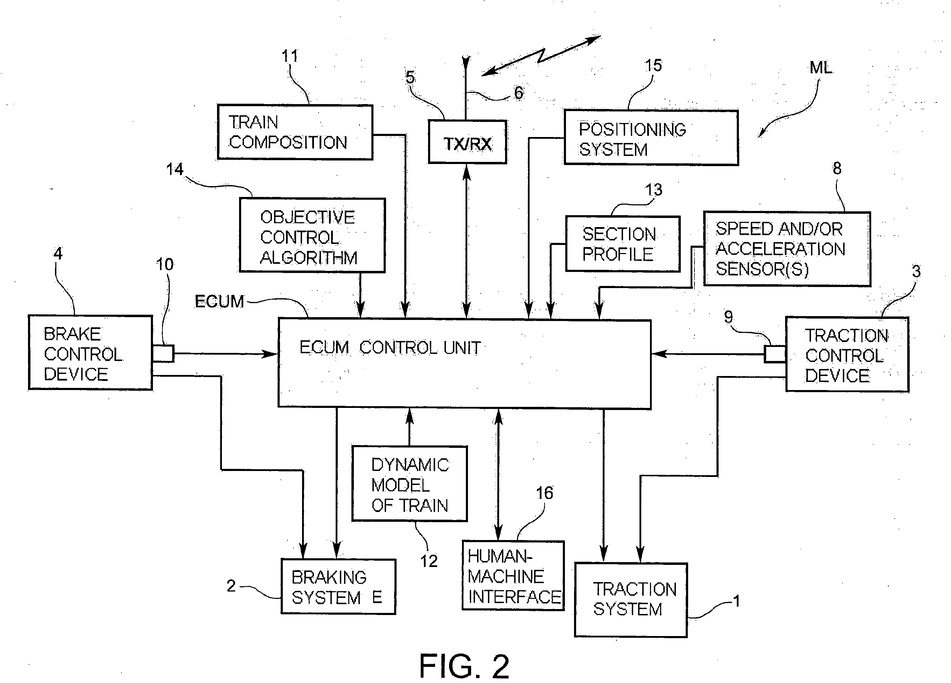

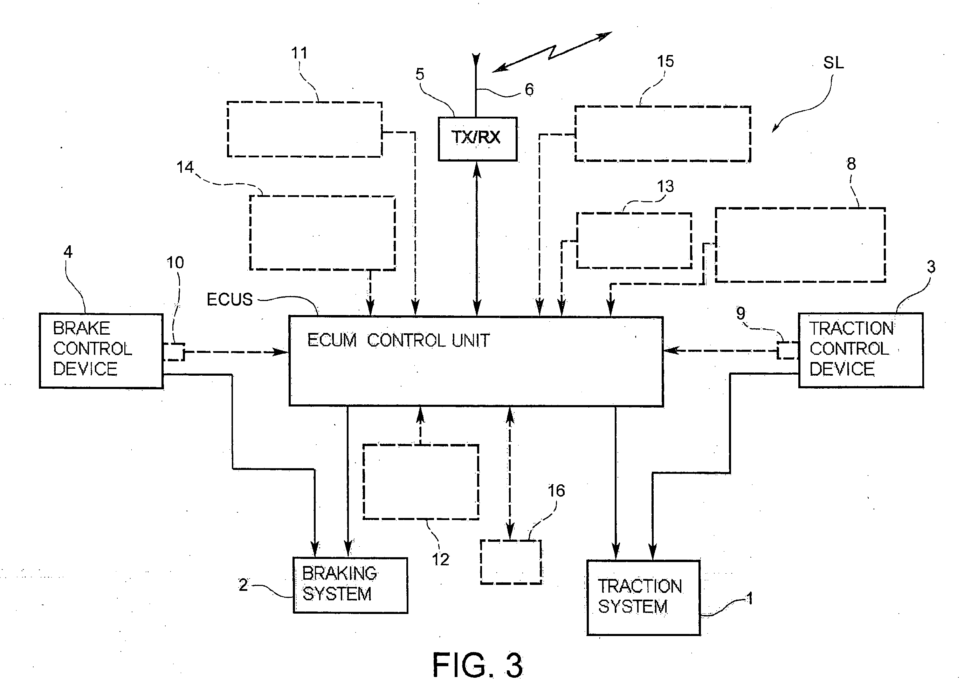

The block diagrams in Figures 2 and 3 illustrate the key elements of the equipment on the leading master locomotive ML and respectively a slave locomotive SL of the train set T.

As shown in said figures each of the locomotives ML and SL have respective traction apparatus 1 and braking apparatus 2, which are associated with corresponding control devices 3 and 4 that can be actuated manually in the cab by a driver.

Each locomotive ML and SL is also provided with a respective electronic control unit ECUM and ECUS and with related transceiver devices 5 to enable said electronic units to communicate with one another.

In the embodiment shown by way of example, the transceiver devices are able to communicate with one another by radio, using a respective antenna 6. However, this solution is not mandatory, and communication between said transceiver devices may be achieved using other channels, such as cables or optical fibres.

In the traction and braking control system according to the invention, the control unit ECUM of the master locomotive ML is associated with sensor devices 8 designed to provide same with electrical signals indicating the speed and/or acceleration of said locomotive.

The control unit ECUM of the master locomotive ML is also linked to detector devices 9 and 10 designed to provide signals indicating the commands given by the driver of said locomotive using the traction control devices 3 and, respectively, the braking control devices 4.

The control unit ECUM is also associated with memory devices 11 storing data describing the composition of the train set T, and other memory devices 12 containing data used to define a mathematical model of the longitudinal dynamics of the train set T.

Other memory devices 13, which are also associated with the unit ECUM, store data that are used to define the profile of the section on which the train set T is travelling.

Other memory devices 14 associated with the control unit ECUM are used to store data defining a control algorithm and at least one predetermined operational objective.

Although the block diagrams in Figures 2 and 3 show the memory devices 11-14 as external to the control units ECUM and ECUS, said memory devices may also be built into said control units.

With reference to Figure 2, the control unit ECUM of the master locomotive ML is also associated with positioning devices 15 that are designed to provide signals indicating the instantaneous position of said locomotive, and therefore of the train set T, along the aforementioned section. The positioning devices may be inertial and/or satellite platforms (GPS and similar), or other systems.

The unit ECUM is also linked to a human-machine interface 16 that is designed to provide information/instructions to the driver of the master locomotive ML.

This control unit ECUM is designed to control the traction and braking of the train set T in the manner described below.

Said unit ECUM is in particular designed to check that the commands given by the driver of the master locomotive ML (and therefore of the train set T) are consistent with a predetermined operational objective stored in the memory devices 14.

This operational objective may for example be to reduce the dynamic stresses exchanged between the different vehicles that make up the train set T during train movement.

An alternative or additional operational objective may for example be maintaining a constant assigned speed in a track section subject to a speed limit.

The consistency of the commands given by the driver using the traction and braking control devices 3, 4 with the aforementioned operational objectives is checked using the information contained in the memory devices 11-14 (composition of the train set T, mathematical model of the dynamic behaviour of the train set T, section profile, control algorithm and operational objectives), the information provided by the positioning system 15, and the information provided by the detector devices 9 and 10 associated with the traction and braking control devices 3, 4.

The control unit ECUM is also designed to use the information received from the devices 8-15 to generate traction and/or braking control signals for the slave locomotive or locomotives SL. Said control signals are sent to the control unit ECUS of at least one slave locomotive SL using the transceiver devices 5, 6.

In each slave locomotive SL, the traction and braking control signals from the control unit ECUM of the master locomotive ML are received by the local control unit ECUS, which then controls the traction system 1 and the braking system 2 of the corresponding slave locomotive SL accordingly.

In the embodiment described thus far, control of the traction and braking of the master locomotive ML is left completely to the driver, and the control unit ECUM can be arranged appropriately to provide said driver, by means of the human-machine interface 16, with information/recommendations regarding the consistency of the commands given by the driver with the operational objective or objectives assigned.

Conversely, the traction and braking of each of the slave locomotives SL is entirely dependent on the commands provided by the control unit ECUM of the master locomotive ML and sent to the control unit ECUS of the corresponding slave locomotive SL.

In another embodiment, traction and control of the master locomotive ML is controlled in part using the commands given manually by the driver using the control devices 3 and 4, and in part using control signals generated by the unit ECUM on the basis of information provided to said unit by the devices 8-15.

This "mixed" traction and braking control method for the master locomotive ML helps to optimize management of the movement of the train set.

The control and decision algorithm implemented by the control unit ECUM can be implemented using artificial-intelligence techniques, for example using neural networks or Petri nets.

The control system according to the present invention helps to optimize management of the longitudinal dynamics of the train set T as a function of the profile of the section being travelled, and to improve the performance of such a train set under specific circumstances (starting, braking, skid conditions, etc.).

Comparison of the block diagrams in Figures 2 and 3 shows how the equipment architecture in each slave locomotive SL is similar to the equipment architecture in the master locomotive ML.

In general, to implement the aforementioned control methods, each slave locomotive SL only strictly requires the devices shown in Figure 3 using an unbroken line.

According to the invention all of the locomotives, ML and SL, to be fitted with the same equipment that can be operated selectively as master locomotive equipment or slave locomotive equipment, such that each locomotive can, as required, be used as a leading master locomotive or an intermediate or trailing slave locomotive. Accordingly, the equipment architecture shown in Figure 3 can therefore be augmented by adding the devices shown in said figure using a dotted line, which are indicated using the same reference signs as used in Figure 2.

Naturally, notwithstanding the principle of the invention, the means of implementation and the specific embodiments may vary greatly from that described and illustrated purely by way of a non-limiting example, without thereby moving outside the scope of the invention as defined in the attached claims.

## Claims

1. Traction and braking control system for a railway train set (T) comprising a leading master locomotive (ML), at least one trailing or intermediate slave locomotive (SL) and a plurality of carriages or cars (C), and provided with a pneumatic braking system and in which each of said locomotives (ML, SL) comprises traction apparatus (1) and braking apparatus (2) associated with respective manual control devices (3; 4) and a respective electronic control unit (ECUM; ECUS) and related signal transceiver means (5, 6) through which the electronic control unit (ECUM) of the master locomotive (ML) is able to communicate with the control unit (ECUS) of said at least one slave locomotive (SL); the arrangement being such that the traction apparatus (1) and the braking apparatus (2) of the slave locomotive (SL) can be controlled by the master locomotive (ML);
the control unit (ECUM) in the master locomotive (ML) being associated with:
- sensor means (8-10) designed to provide said control unit with signals indicating the speed and/or the acceleration of the master locomotive (ML) and the commands given by the driver to the traction control devices (3) and the braking control devices (4);
- memory means (11-14) storing data indicating the composition of the train set (T), data defining a mathematical model of the longitudinal dynamics of the train set (T), data defining a profile of the section on which the train set (T) is travelling;
- positioning means (15) for providing signals indicating the instantaneous position of the train set (T) along said section; and
- a human-machine interface (16) for providing information to the driver;
- generate in a predetermined manner and as a function of the data stored in said memory means (11-14) and the information provided by said sensor means (8-10) and the positioning means (15), signals for controlling traction and/or braking, and to transmit said control signals to the control unit (ECUS) of said at least one slave locomotive (SL) through said transceiver means (5, 6); the system being **characterized in that**:
the memory means (11-14) store data defining at least one predetermined operational objective;
the control unit (ECUM) of the master locomotive (ML) is designed to
- check whether the commands given by the driver using the traction control devices (3) and the braking control devices (4) are consistent with said at least one predetermined operational objective, and to use the human-machine interface (16) to provide the driver with instructions on how to operate said control devices (3, 4) to achieve said predetermined operational objective; and
the control unit (ECUS) in each slave locomotive (SL) is associated with the same means and devices (8-16) that are associated with the control unit (ECUM) of the master locomotive (ML); the control units (ECUM, ECUS) of the master locomotive (ML) and of the slave locomotive or locomotives (SL) being designed to operate selectively as a master control unit or as a slave control unit.

2. Control system according to Claim 1, **characterized in that** the control unit (ECUM) of the master locomotive (ML) is also designed to generate, in a predetermined manner and as a function of the data stored in said memory means (11-14) and the information provided by the aforementioned sensor means (8-10) and the positioning means (15), signals for controlling traction and braking, and to use said signals to control the traction apparatus (1) and the braking apparatus (2) of the master locomotive (ML).

## Patentansprüche

1. Traktions- und Bremssteuer- bzw. -regelsystem für einen Eisenbahnzugsatz (T) umfassend eine führende Master- bzw. Hauptlokomotive (ML), zumindest eine nachlaufende oder intermediäre Slave- bzw. Nebenlokomotive (SL) und eine Mehrzahl von Waggons oder Wagen (C), und versehen mit einem pneumatischen Bremssystem, und wobei jede der Lokomotiven (ML, SL) eine
Traktionsvorrichtung (1) und eine Bremsvorrichtung (2), die jeweiligen manuellen Steuer- bzw. Regeleinrichtungen (3; 4) und einer jeweiligen elektronischen Steuer- bzw. Regeleinheit (ECUM; ECUS) zugeordnet sind, und zugehörige Signal-Transceiver-Mittel (5, 6) umfasst, durch die die elektronische Steuer- bzw. Regeleinheit (ECUM) der Master-Lokomotive (ML) fähig ist, mit der Steuer- bzw. Regeleinheit (ECUS) der zumindest einen Slave-Lokomotive (SL) zu kommunizieren; wobei die Anordnung derart ist, dass die Traktionsvorrichtung (1) und die Bremsvorrichtung (2) der Slave-Lokomotive (SL) von der Master-Lokomotive (ML) gesteuert bzw. geregelt werden können;
wobei die Steuer- bzw. Regeleinheit (ECUM) in der Master-Lokomotive (ML) verbunden ist mit:
- Sensormitteln (8-10), die ausgelegt sind, der Steuer- bzw. Regeleinheit Signale bereitzustellen, die die Geschwindigkeit und/oder Beschleunigung der Master-Lokomotive (ML) und die von dem Fahrer an die Traktionssteuer- bzw. -regeleinrichtungen (3) und die Bremssteuer- bzw. -regeleinrichtungen (4) erteilten Befehle angeben;
- Speichermitteln (11-14), die Daten, die die Zusammensetzung bzw. Anordnung des Zugsatzes (T) angeben, Daten, die ein mathematisches Modell der Längsdynamik des Zugsatzes (T) definieren, Daten, die ein Profil des Abschnitts, auf dem der Zugsatz (T) läuft, definieren, speichern;
- Positionierungsmitteln (15) zum Bereitstellen von Signalen, die die augenblickliche Position des Zugsatzes (T) entlang des Abschnitts angeben; und
- einer Mensch-Maschine-Schnittstelle (16) zum Bereitstellen von Informationen an den Fahrer;
- Erzeugen, in einer vorbestimmten Weise und als eine Funktion der in den Speichermitteln (11-14) gespeicherten Daten und der von den Sensormitteln (8-10) und den Positionierungsmitteln (15) bereitgestellten Informationen, von Signalen zum Steuern bzw. Regeln von Traktion und/oder Bremsen, und um die Steuer- bzw. Regelsignale an die Steuer- bzw. Regeleinheit (ECUS) der zumindest einen Slave-Lokomotive (SL) durch die Transceiver-Mittel (5, 6) zu übertragen;
wobei das System **dadurch gekennzeichnet ist, dass**:
die Speichermittel (11-14) Daten speichern, die zumindest ein vorbestimmtes operatives Ziel definieren;
die Steuer- bzw. Regeleinheit (ECUM) der Master-Lokomotive (ML) ausgelegt ist zum
- Prüfen, ob die vom Fahrer unter Verwendung der Traktionssteuer- bzw. -regeleinrichtungen (3) und der Bremssteuer- bzw. -regeleinrichtungen (4) erteilten Befehle mit dem zumindest einen vorbestimmten operativen Ziel übereinstimmen, und zum Verwenden der Mensch-Maschine-Schnittstelle (16), um dem Fahrer Anweisungen dazu bereitzustellen, wie die Steuer- bzw. Regeleinrichtungen (3, 4) zu bedienen sind, um das vorbestimmte operative Ziel zu erreichen; und
wobei die Steuer- bzw. Regeleinheit (ECUS) in jeder Slave-Lokomotive (SL) denselben Mitteln und Einrichtungen (8-16) zugeordnet ist, die der Steuer- bzw. Regeleinheit (ECUM) der Master-Lokomotive (ML) zugeordnet sind;
wobei die Steuer- bzw. Regeleinheiten (ECUM, ECUS) der Master-Lokomotive (ML) und der Slave-Lokomotive oder -lokomotiven (SL) ausgelegt sind, selektiv als eine Master- bzw. Hauptsteuer- bzw. -regeleinheit oder als eine Slave- bzw. Nebensteuer- bzw. Regeleinheit zu arbeiten.

2. Steuer- bzw. Regelsystem nach Anspruch 1, **dadurch gekennzeichnet, dass** die Steuer- bzw. Regeleinheit (ECUM) der Master-Lokomotive (ML) auch ausgelegt ist, in einer vorbestimmten Weise und als eine Funktion der in den Speichermitteln (11-14) gespeicherten Daten und der von den zuvor genannten Sensormitteln (8-10) und den Positionierungsmitteln (15) bereitgestellten Informationen Signale zum Steuern bzw. Regeln von Traktion und Bremsen zu erzeugen, und diese Signale zu verwenden, um die Traktionsvorrichtung (1) und die Bremsvorrichtung (2) der Master-Lokomotive (ML) zu steuern bzw. zu regeln.

## Revendications

1. Système de contrôle de traction et de freinage pour un convoi ferroviaire (T) comprenant une locomotive maîtresse (ML) principale, au moins une locomotive esclave arrière ou intermédiaire (SL) et une pluralité de voitures ou wagons (C) et étant pourvu d'un système de freinage pneumatique, et dans lequel chacune des locomotives (ML, SL) comprend un dispositif de traction (1) et un dispositif de freinage (2) associés à des dispositifs respectifs de commande manuelle (3 ; 4) et une unité de commande électronique respective (ECUM. ECUS) et des moyens de transmission/réception de signaux (5, 6) associés à l'aide desquels l'unité de commande électronique (ECUM) de la locomotive maîtresse (ML) est en mesure de communiquer avec l'unité de commande (ECUS) de ladite au moins une locomotive esclave (SL) ; l'agencement étant de façon telle que le dispositif de traction (1) et le dispositif de freinage (2) de la locomotive esclave (SL) peuvent être commandés par la locomotive maîtresse (ML) ;
l'unité de commande (ECUM) dans la locomotive maîtresse (ML) étant associée à
- des moyens capteurs (8 à 10) conçus pour fournir à l'unité de commande des signaux indiquant la vitesse et/ou l'accélération de la locomotive maîtresse (ML) et les commandes données par le conducteur aux dispositifs de commande de traction (3) et aux dispositifs de commande de freinage (4),
- des moyens de mémoire (11 à 14) stockant des données indiquant la composition du convoi ferroviaire (T), des données définissant un modèle mathématique des dynamiques longitudinales du convoi ferroviaire (T), des données définissant un profile du trajet sur lequel le convoi ferroviaire (T) se déplace,
- des moyens de positionnement (15) pour fournir des signaux indiquant la position instantanée du convoi ferroviaire (T) le long de ce trajet et
- une interface homme-machine (16) pour fournir des informations au conducteur, engendrer de manière prédéterminée et en fonction des données stockées dans les moyens de mémoire (11 à 14) et des informations fournies par les moyens capteurs (8 à 10) et les moyens de positionnement (15), des signaux pour commander la traction et/ou le freinage et pour transmettre, via les moyens de transmission/réception (5, 6), les signaux de commande à l'unité de commande (ECUS) de ladite au moins une locomotive esclave (SL),
le système étant **caractérisé en ce que**
les moyens de mémoire (11 à 14) stockent des données définissant au moins un objectif opérationnel prédéterminé,
l'unité de commande (ECUM) de la locomotive maîtresse (ML) est conçue pour vérifier si la commande donnée par le conducteur utilisant les dispositifs de commande de traction (3) et les dispositifs de commande de freinage (4) est cohérente avec ledit au moins un objectif opérationnel prédéterminé et pour utiliser l'interface homme-machine (16) pour fournir au conducteur des informations sur la manière d'utiliser les dispositifs de commande (3, 4) pour atteindre l'objectif opérationnel prédéterminé, et
l'unité de commande (ECUS) dans chaque locomotive esclave (SL) est associée aux mêmes moyens et dispositifs (8 à 16) qui sont associés à l'unité de commande (ECUM) de la locomotive maîtresse (ML), les unités de commande (ECUM, ECUS) de la locomotive maîtresse (ML) et de la locomotive esclave (SL) étant conçues pour fonctionner sélectivement comme unité de commande maîtresse ou comme unité de commande esclave.

2. Système de contrôle selon la revendication 1, **caractérisé en ce que** l'unité de commande (ECUM) de la locomotive maîtresse (ML) est également conçue pour engendrer, de manière prédéterminée et en fonction des données stockées dans les moyens de mémoire (11 à 14) et des informations fournies par les moyens capteurs (8 à 10) mentionnés plus haut et les moyens de positionnement (15), des signaux pour commander la traction et/ou le freinage et pour utiliser les signaux pour commander le dispositif de traction (1) et le dispositif de freinage (2) de la locomotive maîtresse (ML).
